Europäisches Patentamt

European Patent Office

Office européen des brevets

(19)

(11) Veröffentlichungsnummer: **0 007 998**
**B1**

(12)

# EUROPÄISCHE PATENTSCHRIFT

(45) Veröffentlichungstag der Patentschrift:
**25.11.81**

(51) Int. Cl.³: **F 02 P 5/14**

(21) Anmeldenummer: **79102238.7**

(22) Anmeldetag: **03.07.79**

(54) Verfahren und Vorrichtung zur wenigstens teilweisen Unterbrechung der Kraftstoffzufuhr bei vorzugsweise in Fahrzeugen eingebauten Brennkraftmaschinen im Schiebebetrieb.

(30) Priorität: **08.08.78 DE 2834638**

(43) Veröffentlichungstag der Anmeldung:
**20.02.80 Patentblatt 80/4**

(45) Bekanntmachung des Hinweises auf die Patenterteilung:
**25.11.81 Patentblatt 81/47**

(84) Benannte Vertragsstaaten:
**DE FR GB SE**

(56) Entgegenhaltungen:
**DE-A1-2 626 862**
**FR-A-2 300 227**

(73) Patentinhaber: **ROBERT BOSCH GMBH, Postfach 50, D-7000 Stuttgart 1 (DE)**

(72) Erfinder: **Klencke, Uwe, Dr. Dipl.-Ing., Reichertshalde 35, D-7140 Ludwigsburg (DE)**
Erfinder: **Jundt, Werner, Dipl.-Ing., Wilhelm-Blos-Strasse 67, D-7140 Ludwigsburg (DE)**
Erfinder: **Seeger, Karl, Dipl.-Ing., Gerlingerstrasse 18, D-7257 Ditzingen (DE)**

Verfahren und Vorrichtung zur wenigstens teilweisen Unterbrechung der Kraftstoffzufuhr bei vorzugsweise in Fahrzeugen eingebauten Brennkraftmaschinen im Schiebebetrieb

### Stand der Technik

Die Erfindung geht aus von einem Verfahren und einer Vorrichtung nach der Gattung des Patentanspruchs 1. Es ist schon aus der DE-A-2 626 862 bekannt, nach Beendigung des Schiebebetriebs oder bei Unterschreitung einer vorgegebenen Drehzahlschwelle die Kraftstoffzufuhr wieder vollständig einzuschalten. Dadurch können unerwünscht hohe Drehmomentstöße an der Brennkraftmaschine bzw. am Fahrzeug auftreten, was nachteilig für den Fahrkomfort ist und die Brennkraftmaschine stark beansprucht.

### Vorteile der Erfindung

Das erfindungsgemäße Verfahren mit den kennzeichnenden Merkmalen des Patentanspruchs 1 hat demgegenüber den Vorteil, daß bei Wiedereinsetzen der Kraftstoffzufuhr auch die Beschleunigung wieder sanft einsetzt, da durch Verschiebung des Zündzeitpunkts in Richtung Spätzündung das Drehmoment stark reduziert wird.

Durch die in den abhängigen Patentansprüchen aufgeführten Maßnahmen sind vorteilhafte Weiterbildungen und Verbesserungen des im Patentanspruch 1 angegebenen Verfahrens möglich. Ein besonders weiches Einsetzen der Beschleunigung kann dadurch erzielt werden, daß mehrere, auf das Wiedereinsetzen der Kraftstoffzufuhr folgende Zündzeitpunkte verschiebbar sind, wobei die Verschiebung beim jeweils darauffolgenden Zündzeitpunkt geringer wird. Dies kann vorteilhaft durch eine Verlängerung des Schließwinkelsignals bzw. durch ein additives Schließwinkelsignal erreicht werden, das durch Auszählvorgänge erzeugt wird und dessen Verringerung entweder durch Erhöhung der Auszählfrequenz oder durch Verringerung des auszuzählenden Zahlenwerts eingestellt werden kann.

Durch die in den untergeordneten Vorrichtungsansprüchen aufgeführten Maßnahmen ergeben sich Vorteile und Verbesserungen darin, daß unter Zugrundelegung einer Brennkraftmaschine mit digitaler Zündanlage und Ruhestromabschaltung mit einem sehr geringen Aufwand eine zusätzliche Vorrichtung zur wenigstens teilweisen Unterbrechung der Kraftstoffzufuhr im Schiebebetrieb vorgesehen werden kann, die eine Einrichtung aufweist, durch die eine Unterbrechung der Kraftstoffzufuhr unterhalb einer festlegbaren Drehzahlschwelle verhindert werden kann, bei der die Gefahr eines Aussetzens der Brennkraftmaschine besteht. Unter Verwendung des für die Ruhestromabschaltung ohnehin notwendigen digitalen Zählers zur Drehzahlerkennung kann diesem wenigstens eine weitere Drehzahldekodiereinrichtung zur Wiedereinschaltung bzw. zur Verhinderung einer Unterbrechung der Kraftstoffzufuhr zugeordnet werden. Dadurch können im Zusammenhang mit einer Kraftstoffabschaltung unerwünschte Drehmomentstöße verhindert werden, indem die Brennkraftmaschine nicht der Gefahr eines Ausschalt- bzw. Wiedereinschaltrucks ausgesetzt wird.

Besonders vorteilhaft ist es auch, aer Drehzahlerkennung eine weitere Drehzahldekodierstufe zuzuordnen, deren Ausgang ebenfalls die Kraftstoffabschaltung steuert. Auf diese Weise kann mit geringstem Aufwand ohne zusätzliches Stellglied eine Drehzahlbegrenzung der erfindungsgemäßen Vorrichtung zugeordnet werden. Außerdem ist bei einem solchen Verfahren die Gefahr von Fehlzündungen geringer als bei bekannten Verfahren, bei denen die Zündung unterbrochen wird.

Schließlich ist noch die digitale Realisierung der Schaltung von Vorteil, da hierdurch eine leichte Integration der Vorrichtung ermöglicht wird. Die Drehzahlschwellen können dabei vorteilhaft durch Zählvorgänge in digitalen Zählern festgelegt werden, wobei die Ausgangszahlenwerte in digitalen Dekodiereinrichtungen bestimmten Drehzahlschwellen zugeordnet werden.

### Zeichnung

Ein Ausführungsbeispiel der Erfindung ist in der Zeichnung dargestellt und in der nachfolgenden Beschreibung näher erläutert. Es zeigen Fig. 1 eine schaltungsmäßige Ausgestaltung des Ausführungsbeispiels, Fig. 2 ein Diagramm zur Erläuterung der Wirkungsweise der langsamen Reduzierung der Zündzeitpunkt-Spätverstellung und Fig. 3 ein Diagramm zur Erläuterung der Wirkungsweise der Drehzahlschwellen für die Wiedereinschaltung der Kraftstoffzufuhr bzw. für die Drehzahlbegrenzung.

### Beschreibung der Erfindung

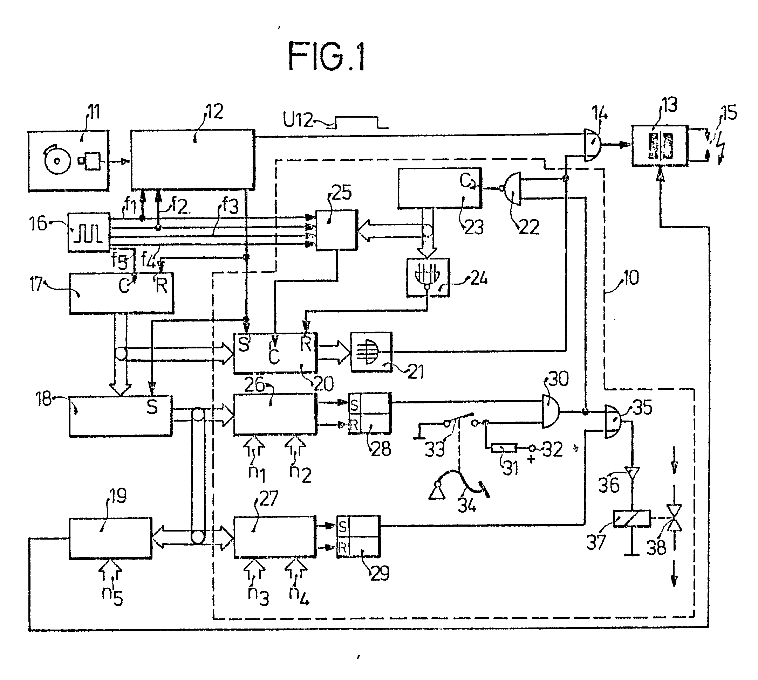

In dem in Fig. 1 dargestellten Ausführungsbeispiel der Erfindung stellt der durch eine unterbrochene Linie umrahmte Schaltungsteil 10 den Bereich der Schaltung dar, der für die Abschaltung der Kraftstoffzufuhr zuständig ist, während die übrige, außerhalb des Schaltungsteils 10 liegende Schaltung eine z.B. aus der DE-A-2 701 968 bekannte Zündanlage für Brennkraftmaschinen mit einer Ruhestromabschaltung für den Zündspulenstrom zeigt.

Der bekannte Teil besteht aus einer vorzugsweise mit der Kurbelwelle einer Brennkraftmaschine verbundenen Signalgebervorrichtung 11, durch die eine Zündungselektronik 12 zur Festlegung eines Schließwinkelsignals steuerbar ist. Durch die Zündungselektronik 12 ist eine Zündungsendstufe 13 über ein ODER-Gatter 14 steuerbar. Eine solche, im angegebenen Stand der Technik näher dargestellte Zündungsendstufe 13 besteht üblicherweise aus einem Transistor im Primärstromkreis einer Zündspule, in deren Sekundärstromkreis wenigstens eine Zündkerze 15 geschaltet ist. Während des Schließwinkelsignals ist der Transistor stromleitend, wodurch magnetische Energie in der Zündspule gespeichert wird. Am Ende des Schließwinkelsignals sperrt der Transistor, wodurch ein Zündfunke an der Zündkerze 15 induziert wird.

Ein Taktfrequenzgenerator 16 erzeugt fünf Taktfrequenzen f1 bis f5. Während die Taktfrequenzen f1 und f2 der digitalen Zündungselektronik 12 zugeführt sind, ist die Taktfrequenz f5 an den Takteingang C des digitalen Zählers 17 angelegt. Der Rücksetzeingang R des Zählers 17 ist an die Zündungselektronik 12 angeschlossen, von wo er mit jeder Rückflanke eines Schließwinkelsignals einen Rücksetzimpuls erhält. Die Ausgangszahlenwerte des Zählers 17 sind mit Zahleneingängen eines ebenfalls als Zähler ausgebildeten Zwischenspeichers 18 verbunden, dessen Setzeingang ebenfalls von der Zündungselektronik 12 her bei jeder Rückflanke eines Schließwinkelsignals einen Setzimpuls erhält. Die Zahlenausgänge des Zwischenspeichers 18 sind mit ersten Zahleneingängen eines digitalen Komparators 19 verbunden, an dessen Vergleichszahleneingänge ein Zahlenwert angelegt ist, der einer sehr niedrigen Drehzahl n 5 entspricht. Durch den mit der Zündungsendstufe 13 verbundenen Ausgang des Komparators 19 ist der Strom in der Zündungsendstufe abschaltbar. Dies kann z. B. gemäß dem angegebenen Stand der Technik durch eine Masseverbindung der Basis des Endstufentransistors erfolgen oder aber über eine dieser Basis vorgeschaltete Torstufe.

Der zu der bekannten Anordnung hinzutretende Schaltungsteil 10 besthsteht aus einem weiteren Zähler 20, dessen Zahleneingänge mit den Zahlenausgängen des Zählers 17 verbunden sind. Der Setzeingang S dieses Zählers 20 ist mit dem Setzeingang S des Zwischenspeichers 18 verbunden. Die Zahlenausgänge des Zählers 20 sind mit Eingängen einer Dekodiereinrichtung 21 zur Erkennung des Zählerstandes Null verbunden, deren Ausgang sowohl mit einem weiteren Eingang des ODER-Gatters 14, wie auch mit einem Eingang eines NAND-Gatters 22 verbunden ist. Für diese Dekodiereinrichtung 21 kann z. B. ein ODER-Gatter Verwendung finden. Ein solches ODER-Gatter gibt bei sämtlichen Zählerständen ausgangsseitig ein 1-Signal ab, mit Ausnahme des Zählerstandes Null. Der Ausgang des NAND-Gatters 22 ist mit dem Takteingang C eines weiteren Zählers 23 verbunden, dessen Zahlenausgänge über eine weitere Dekodiereinrichtung 24 zur Erkennung des Zählerstandes Null mit dem Rücksetzeingang R des Zählers 20 verbunden sind. Die Zahlenausgänge des Zählers 23 sind weiterhin mit Steuereingängen einer Umschaltvorrichtung 25 verbunden, über die in Abhängigkeit des Schaltzustandes eine der 4 Taktfrequenzen f1 bis f4 dem Takteingang C des Zählers 20 zuführbar sind. Für eine solche Umschaltvorrichtung 25, die in Abhängigkeit einer Binärzahl einen von mehreren Eingängen einem Ausgang zuordnet, ist z. B. ein Multiplexer verwendbar, wie er als Bauteil 4052 im Handel erhältlich ist.

Die Zahlenausgänge des Zwischenspeichers 18 sind weiterhin mit Zahleneingängen von zwei weiteren digitalen Komparatoren 26, 27 verbunden. An zwei Gruppen von Vergleichszahleneingängen sind vorzugsweise durch feste Verdrahtung die Binärzahlen n 1 und n 2, bzw. n 3 und n 4 angelegt. Zwei Ausgänge des Komparators 26 sind mit dem Setzeingang S bzw. mit dem Rücksetzeingang R eines Flip-Flops 28 verbunden. Ist der am Komparator 26 anliegende Zahlenwert n 2 unterschritten, so wird ausgangsseitig ein Setzsignal für das Flip-Flop 28 erzeugt, ist dagegen der Zahlenwert n 1 überschritten, so wird ein Rücksetzsignal erzeugt. Ein solcher digitaler Komparator ist z. B. durch zwei handelsübliche Komparatoren MC 14 585 realisierbar. Auch dem Komparator 27 ist ein entsprechendes Flip-Flop 29 nachgeschaltet, wobei anstelle der Binärzahl n 2 die Binärzahl n 4 tritt und anstelle der Binärzahl n 1 die Binärzahl n 3. Ein Ausgang des Flip-Flops 28 ist an einen Eingang eines UND-Gatters 30 angeschlossen, dessen zweiter Eingang einmal über einen Widerstand 31 mit einer ein positives Spannungspotential aufweisenden Klemme 32 und andererseits über einen Schalter 33 mit Masse verbunden ist. Der Schalter 33 ist nur bei Leerlaufstellung der Brennkraftmaschine geöffnet und zu diesem Zweck mechanisch mit dem Gaspedal 34 der Brennkraftmaschine verbunden. Wird das Gaspedal 34 betätigt, so ist der Schalter 33 geschlossen. Wird dagegen das Gaspedal 34 losgelassen, so öffnet der Schalter 33.

Der Ausgang des UND-Gatters 30 ist sowohl mit einem weiteren Eingang des NAND-Gatters 22, wie auch mit einem Eingang eines ODER-Gatters 35 verbunden, an dessen zweiten Eingang der Ausgang des Flip-Flops 29 angeschlossen ist. Der Ausgang des ODER-Gatters 35 ist über eine Verstärkeranordnung 36 und eine Magnetwicklung 37 an Masse angeschlossen. Die Magnetwicklung 37 steuert ein Ventil 38 zur Unterbrechung der Kraftstoffzufuhr zur Brennkraftmaschine. Ein solches Ventil 38 ist vorzugsweise im Vergaser einer Brennkraftmaschine angeordnet und unterbricht dort ganz oder wenigstens teilweise die Kraftstoffzuführung zum Saugrohr. Bei einer Brennkraftmaschine mit elektronischer Benzineinspritzung wird das Ausgangssignal des UND-Gatters 35 sinngemäß dazu verwendet, die Einspritzventile zu schließen.

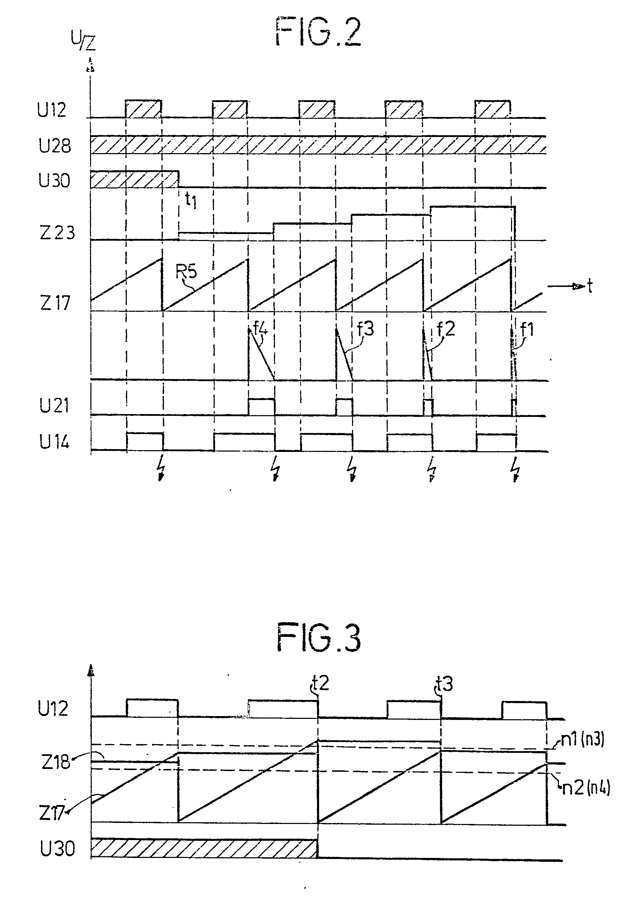

Zunächst soll die Wirkungsweise des bekannten Teils der Schaltung unter Zuhilfenahme des in Fig. 2 dargestellten Signaldiagramms erläutert werden. Durch die Zündungselektronik 12 wird ein Schließwinkelsignal U 12 erzeugt. Der als Aufwärtszähler geschaltete Zähler 17 zählt periodisch mit der Taktfrequenz f 5 aufwärts und wird mit jeder Rückflanke eines Signals U 12 rückgesetzt. Der jeweils erreichte Zählerstand ist umso größer, je niedriger die Drahzahl ist. Durch ein ebenfalls mit der Rückflanke eines Signals U 12 erzeugtes Setzsignal für den Zwischenspeicher 18 übernimmt dieser jeweils den erreichten Zählerstand des Zählers 17 und hat somit ständig einen drehzahlabhängigen Zahlenwert gespeichert. Gegebenenfalls unter Verwendung einer nicht näher dargestellten Verzögerungseinrichtung muß gewährleistet sein, daß der erreichte Zählerstand des Zählers 17 in den Zwischenspeicher 18 übernommen wird, bevor der Zähler 17 rückgesetzt wird. Dieser drehzahlabhängige Zahlenwert liegt am Komparator 19 an und wird dort mit dem Zahlenwert n 5 verglichen, der einer sehr kleinen Drehzahl von z. B. 40 U/min entspricht. Ein solcher Drehzahlwert kann im normalen Betrieb einer Brennkraftmaschine nie vorkommen. Wird er dennoch erreicht, bzw. unterschritten, so ist dies ein Kriterium dafür, daß die Brennkraftmaschine nicht mehr in Betrieb ist. Ein in diesem Fall erzeugtes Ausgangssignal am Komparator 19 sperrt den Transistor im Primärstromkreis der Zündspule und verhindert so einen Ruhestrom. In einer einfacheren Ausführung kann auch auf die Verwendung des Zwischenspeichers 18 verzichtet werden.

Zur Erläuterung der Wirkungsweise des Schaltungsteils 10 zur Unterbrechung der Kraftstoffzufuhr sei zunächst davon ausgegangen, daß eine höhere Drehzahl vorliegt, als die Drehzahl, die dem Zahlenwert n 2 entspricht. Der im Zwischenspeicher 18 gespeicherte Zahlenwert liegt also unter n 2, wodurch das Flip-Flop 28 gesetzt ist. Wird nun das Gaspedal 34 losgelassen, so kommt die Brennkraftmaschine in den Schiebebetrieb und der Schalter 33 öffnet. Dadurch wird am Ausgang des UND-Gatters 30 ein Signal U 30 erzeugt, durch das die Magnetwicklung 37 erregt und das Ventil 38 geschlossen wird. Die Kraftstoffzufuhr ist unterbrochen, und es tritt eine Kraftstoffersparnis auf. Zum Zeitpunkt t 1 wird zur Erreichung einer Beschleunigung das Gaspedal 34 wieder betätigt, und der Schalter 33 schließt. Der Ausgang des UND-Gatters 30 wechselt zu einem Null-Signal, wodurch das Magnetventil 37 wieder abfällt und Kraftstoff wieder zur Brennkraftmaschine fließen kann. Durch die Rückflanke des Signals U 30 wird gleichzeitig über das NAND-Gatter 22 ein Taktimpuls für den Zähler 23 erzeugt. Durch die nunmehr an den Zahlenausgängen des Zählers 23 anliegende Binärzahl 1 wird über die z. B. als NOR-Gatter ausgebildete Dekodiereinrichtung 24 die Sperrung des Zählers 20 über den Rücksetzeingang aufgehoben und gleichzeitig die Taktfrequenz f 4 auf den Takteingang dieses Zählers 20 geschaltet. Da der Zähler 20 als Rückwärtszähler geschaltet ist, bleibt er zunächst auf dem Zahlenwert Null stehen, bis er mit der Rückflanke des nächsten Signals U 12 den erreichten Zahlenwert des Zählers 17 übernimmt. Von diesem übernommenen Zahlenwert ab wird mit der Taktfrequenz f 4 abwärtsgezählt. Während des Zählvorgangs liegt ständig ein Signal U 21 am Ausgang der Dekodiereinrichtung 21 ab. Dieses Signal U 21 wirkt als additives Schließwinkelsignal, da es nach Beendigung des regulären Schließwinkelsignals U 12 über das ODER-Gatter 14 die Endstufe im stromleitenden Zustand verharren läßt. Erst bei Erreichen des Zählerstandes Null im Zähler 20 erscheint am Ausgang der Dekodiereinrichtung 21 ein 0-Signal, durch das ein Zündfunke erzeugt wird. Neben der Erzeugung eines Zündfunkens wird durch die Rückflanke des Signals U 21 über das NAND-Gatter 22 ein weiterer Taktimpuls für den Zähler 23 erzeugt. Durch die nunmehr am Ausgang des Zählers 23 anliegende Binärzahl 2 wird über den Multiplexer 25 nunmehr die Taktfrequenz f 3 an den Zähler 20 angelegt. Mit der nächsten Rückflanke eines Signals U 12 wird der Zähler 20 wiederum gesetzt und zählt nunmehr mit der höheren Taktfrequenz f 3 abwärts, wodurch das additive Schließwinkelsignal 21 kürzer wird. Der gleiche Vorgang wiederholt sich, und die noch höheren Taktfrequenzen f 2 und f 1 werden nacheinander dem Zähler 20 zugeführt. Dadurch verkleinert sich das additive Schließwinkelsignal U 21 immer mehr, wodurch das Gesamtschließwinkelsignal U 14 praktisch kontinuierlich auf das reguläre Schließwinkelsignal U 12 zurückgeführt wird. Das Drehmoment der Brennkraftmaschine nimmt dadurch ständig zu und es erfolgt eine weiche und ruckfreie Beschleunigung. Der Zähler 23 ist als Ringzähler geschaltet und wechselt im dargestellten Fall vom Zahlenwert 4 wieder auf den Zahlenwert Null. Dadurch wird der Zähler 20 über die Dekodiereinrichtung 24 gesperrt, bis eine erneute Rückflanke eines Signals U 30 auftritt.

Die Reduzierung des additiven Schließwinkels U 21 kann natürlich unter Verwendung einer größeren Zahl von Taktfrequenzen in einer größeren Zahl von Stufen vor sich gehen. Anstelle der stufenweisen Erhöhung der Taktfrequenz oder zusätzlich zur stufenweisen Erhöhung der Taktfrequenz kann auch eine stufenweise Verkleinerung des in den Zähler 20 übernommenen Zahlenwerts treten. Die Umschaltung kann dabei ebenfalls über einen Multiplexer erfolgen. Ausgehend vom Zahlenwert des Zählers 17 kann dieser Zahlenwert für die weiteren Stufen durch digitale Subtraktion oder Division reduziert werden.

Neben der Betätigung des Gaspedals 34 erfolgt die Wiedereinschaltung der Kraftstoffzufuhr auch bei Unterschreitung eines unteren, festlegbaren Drehzahlwerts, da anderenfalls die Brennkraftmaschine stehenbleibt, insbesondere bei vollständiger Abschaltung der Kraftstoffzufuhr. Diese untere Drehzahlschwelle beträgt z. B. 1500 U/min, was einem Binärzahlenwert von n 1 entspricht. Bei nicht betätigtem Gaspedal 34 und damit abgeschalteter Kraftstoffzufuhr sinkt die Drehzahl immer mehr ab. Dies ist in Fig. 3 durch Verlängerung der Schließwinkelsignale U 12 deutlich gemacht. Durch den größer werdenden Abstand der Rückflanken der Signale U 12 wird ein immer größerer Zahlenwert im Zähler 17 erreicht. Dieser Zahlenwert wird — wie bereits beschrieben — mit jeder Rückflanke eines Signals U 12 in den Zwischenspeicher 18 übernommen. Der im Zwischenspeicher 18 vorliegende Zahlenwert steigt dadurch stufenförmig an. Zum Zeitpunkt t 2 wird der Zahlenwert n 1 überschritten, worauf der Komparator 26 ein Rücksetzsignal für das Flip-Flop 28 erzeugt. Der Ausgang des UND-Gatters 30 wechselt dabei auf ein Null-Signal, das Magnetventil 37, 38 fällt ab, und Kraftstoff kann wieder zur Brennkraftmaschine fließen. Durch diese Kraftstoffzufuhr beschleunigt die Brennkraftmaschine wieder und die Signale U 12 werden wieder kürzer. Dadurch wird zwar zum Zeitpunkt t 3 der Zahlenwert n 1 wieder unterschritten, jedoch wird ein Setzsignal für das Flip-Flop 28 erst bei Unterschreitung des Zahlenwerts n 2 erzeugt, also wenn z. B. eine Drehzahl von 2000 U/min überschritten wird. Durch die dadurch erreichte Schalthysterese wird verhindert, daß das Magnetventil 37, 38 in schnellem Rhythmus hin- und herschaltet, z. B. im Rhythmus der Signale U 12. Das Wiedereinschalten der Kraftstoffzufuhr ist natürlich auch im Falle der Unterschreitung der unteren Grenzdrehzahl von 1500 U/min von einer Zündzeitpunkt-Verstellung gemäß Fig. 2 begleitet, so daß bei nicht betätigtem Gaspedal die Brennkraftmaschine die Drehzahl sanft zwischen 1500 U/min und 2000 U/min hin- und herpendelt.

Insbesondere bei Vorliegen einer digitalen Zündanlage mit Ruhestromabschaltung ist eine sehr einfache und billige Realisierung der Kraftstoffabschaltung möglich. Es werden dann lediglich die zusätzlichen Bauteile 26, 28, 30 bis 38 benötigt. Diese Bauteile können leicht auf den Chip der Zündanlage mit integriert werden (natürlich mit Ausnahme der Schalter und Relais).

Ebenso kann dieser Schaltung mit geringstem Aufwand noch die Funktion einer Drehzahlbegrenzung bei einer höchstzulässigen Drehzahl zugefügt werden. Die Hinzufügung besteht lediglich aus den Bauteilen 27, 29, 35. Unterschreitet die im Zwischenspeicher 18 gespeicherte Binärzahl die Zahl n 4, die beispielsweise einer höchstzulässigen Drehzahl von 6000 U/min entspricht, so wird am Ausgang des Komparators 27 ein Setzsignal für das Flip-Flop 29 erzeugt, durch das über das ODER-Gatter 35 das Magnetventil 37, 38 eingeschaltet wird, wodurch die Kraftstoffzufuhr unterbrochen wird. Sinkt infolge der abgeschalteten Kraftstoffzufuhr die Drehzahl wieder unter einen weiteren Schwellwert von z. B. 5800 U/min, was gleichbedeutend ist mit dem Überschreiten der Binärzahl n 3, so erfolgt wiederum ein Einschalten der Kraftstoffzufuhr durch Rücksetzen des Flip-Flops 29. Auch hier verhindert die durch die beiden Schwellwerte n3, n4 erzeugte Hysterese ein ständiges Hin- und Herschalten des Magnetventils 37, 38.

## Patentansprüche

1. Verfahren zur wenigstens teilweisen Unterbrechung der Kraftstoffzufuhr bei vorzugsweise in Fahrzeugen eingebauten Brennkraftmaschinen im Schiebebetrieb, dadurch gekennzeichnet, daß bei Wiedereinsetzen der Kraftstoffzufuhr wenigstens ein darauffolgender Zündzeitpunkt in Richtung Spätzündung verschiebbar ist.

2. Verfahren nach Patentanspruch 1, dadurch gekennzeichnet, daß mehrere darauffolgende Zündzeitpunkte verschiebbar sind, wobei die Verschiebung beim jeweils darauffolgenden Zündzeitpunkt geringer wird.

3. Verfahren nach Patentanspruch 1 oder 2, dadurch gekennzeichnet, daß zur Verschiebung des wenigstens einen Zündzeitpunkts ein additives Schließwinkelsignal (U 21) erzeugbar ist.

4. Verfahren nach Patentanspruch 3, dadurch gekennzeichnet, daß zur Erzeugung des additiven Schließwinkelsignals (U 21) ein digitaler Zählvorgang abläuft, wobei der Zählbeginn durch das Signalende eines regulären Schließwinkelsignals (U 12) und das Zählende durch das Ende des Auszählvorgangs eines vorgegebenen Zahlenwertes festgelegt ist, und daß durch einen Dekodiervorgang während des Zählvorgangs das additive Schließwinkelsignal (U 21) erzeugbar ist.

5. Verfahren nach Patentanspruch 4, dadurch gekennzeichnet, daß die Auszählfrequenz bei jedem Zählvorgang erhöht wird.

6. Verfahren nach Patentanspruch 4 oder 5, dadurch gekennzeichnet, daß der vorgegebene Zahlenwert bei jedem Zählvorgang verringert wird.

7. Verfahren nach Patentanspruch 5 oder 6, dadurch gekennzeichnet, daß zur Erhöhung der Auszählfrequenz und/oder zur Verringerung des vorgegebenen Zahlenwerts beim Wiedereinsetzen der Kraftstoffzufuhr ein durch additive Schließwinkelsignale (U 21) gesteuerter Umschaltvorgang ausgelöst wird, wodurch verschiedene Auszählfrequenzen und/oder Zahlenwerte nacheinander den Auszählvorgang bestimmen.

8. Verfahren nach Patentanspruch 7, dadurch gekennzeichnet, daß die Umschaltvorrichtung als Ringzähler (23) ausgebildet ist, durch den ein Multiplexer (25) steuerbar ist.

9. Verfahren nach einem der vorhergehenden Patentansprüche, dadurch gekennzeichnet, daß im Rhythmus der regulären Schließwinkelsignale (U 12) weitere periodische Zählvorgänge durchgeführt werden und daß der jeweils erreichte Zahlenwert den vorgegebenen Zahlenwert für die Auszählung des additiven Schließwinkelsignals vorgibt.

10. Vorrichtung zur Ausführung des Verfahrens nach einem der vorhergehenden Patentansprüche, mit einem im Schiebebetrieb ansprechenden Schalter und mit einer dadurch
steuerbaren Drosseleinrichtung für die Kraftstoffzufuhr, mit einer Drehzahlerkennungsstufe,
durch die unterhalb einer festlegbaren Drehzahl
eine Betätigung der Drosseleinrichtung verhindert wird, dadurch gekennzeichnet, daß bei
Brennkraftmaschinen mit digitaler Zündanlage
und einer Vorrichtung zur Ruhestromabschaltung für die Zündspule einem zur Ruhestromabschaltung verwendeten digitalen Zähler (17), der
im Rhythmus der Schließwinkelsignale (U 12)
periodische Zählvorgänge ausführt, neben einer
Dekodiereinrichtung (18, 19) für die Abschaltung
des Zündspulenstroms eine weitere Dekodiereinrichtung (18, 26) zugeordnet ist, wobei der
digitale Zähler (17) und die weitere Dekodiereinrichtung (18, 26) die Drehzahlerkennungsstufe
darstellen.

11. Vorrichtung nach Patentanspruch 10,
dadurch gekennzeichnet, daß der periodische
Zählvorgänge im Rhythmus der regulären
Schließwinkelsignale (U 12) durchführenden
Zählvorrichtung (17) eine weitere Dekodiereinrichtung (18, 27) zugeordnet ist, die bei einem
der maximalen Drehzahl zugeordneten Zahlenwert die Kraftstoffzufuhr unterbricht.

12. Vorrichtung nach Patentanspruch 10 oder
11, dadurch gekennzeichnet, daß zur Erreichung
einer Schalthysterese bei einem weiteren, einer
bestimmten Drehzahl zugeordneten Zahlenwert
eine Umschaltung der Drosseleinrichtung (36 bis
38) in den jeweils zweiten Schaltzustand erfolgt.

13. Vorrichtung nach Patentanspruch 12,
dadurch gekennzeichnet, daß der Dekodiereinrichtung (18, 26 bzw. 18, 27) eine bistabile
Schaltstufe (28 bzw. 29) nachgeschaltet ist,
deren Schaltpunkte durch zwei Dekodierwerte
vorgebbar sind.

**Claims**

1. A method for at least partially interrupting
the fuel supply to combustion engines operating
on overrun, preferably incorporated in vehicles,
characterised in that, on re-introducing the fuel
supply, at least one subsequent ignition point is
displaceable in a direction of ignition retarding.

2. A method according to claim 1, characterised in that, a plurality of successive ignition
points are displaceable wherein the displacement of each successive ignition point is smaller.

3. A method according to claim 1 or 2,
characterised in that, an additive dwell-angle
signal (U 21) can be generated for displacing the
at least one ignition point.

4. A method according to claim 3, characterised in that, a digital counting operation
proceeds for generating the additive dwell-angle
signal (U 21) wherein the start of count ist
established by the signal end of a regular
dwell-angle signal (U 12) and the end of count is
established by the end of the counting out
operation of a predetermined numerical value and that the additive dwell-angle signal (U 21)
can be generated by a deconding operation
during the counting operation.

5. A method according to claim 4, characterised in that, the counting out frequency is
increased at each counting operation.

6. A method according to claim 4 or 5,
characterised in that, the predetermined numerical value is reduced at each counting operation.

7. A method according to claim 5 or 6,
characterised in that, a switching over operation
controlled by additive dwell-angle signals (U 21)
is triggered on reintroduction of the fuel supply
for increasing the counting out frequency and/or
for reducing the predetermined numerical value,
whereby different counting out frequencies
and/or successive numerical values determine
the counting out operation.

8. A method according to claim 7, characterised in that, the switching over device is formed
as a ring counter (23) by which a multiplexer (25)
can be controlled.

9. A method according to one of the preceding
claims, characterised in that, further periodic
counting operations are carried out in rhythm
with the regular dwell-angle signals (U 12) and
that the respective numerical value which is
reached provides the predetermined numerical
value for counting out the additive dwell-angle
signal.

10. Apparatus for carrying out the method
according to one of the preceding claims,
comprising a switch responsive to over-running
operation and comprising a throttle device for
the fuel supply controllable by the switch, a
speed recognition stage through which actuation of the throttle device is prevented below an
establishable speed, characterised in that, with
combustion engines provided with digital ignition systems and a device for disconnecting the
static current for the ignition coil, in addition to a
decoding device (18, 19) for the disconnection of
the ignition coil current, a further decoding
device (18, 26) is associated with a digital
counter (17) used for the static current disconnection and which performs periodic counting
operations in rhythm with the dwell-angle
signals (U 12), wherein the digital counter (17)
and the further decoding device (18, 26)
represent the speed recognition stage.

11. Apparatus according to claim 10, characterised in that, a further decoding device (18, 27),
which interrupts the fuel supply at a numerical
value associated with the maximum speed, is
associated with the counting device (17) carrying
out periodic counting operations in rhythm with
the regular dwell-angle signals (U 12).

12. Apparatus according to claim 10 or 11,
characterised in that, a switching over of the
throttle device (26 to 38) into the respective
second switching condition, is effected for
achieving a switching hysteresis at a further
numerical value associated with a particular
speed.

13. Apparatus according to claim 12, characterised in that, a bistable switching stage (28 or 29), the switching points of which can be provided by two decoded values, are connected beyond the decoding device (18, 26 or 18, 27).

## Revendications

1. Procédé pour interrompre au moins partiellement l'alimentation en carburant dans des moteurs à combustion interne montés par exemple sur des véhicules fonctionnant en freinage moteur, procédé caractérisé en ce que lors du rétablissement de l'alimentation en carburant, au moins un instant d'allumage suivant ce rétablissement est susceptible d'être décalé dans le sens d'un allumage plus tardif.

2. Procédé selon la revendication 1, caractérisé en ce que plusieurs instants d'allumage suivant ce rétablissement sont susceptibles d'être décalés, ce décalage allant en se réduisant pour chaque instant d'allumage successif.

3. Procédé selon l'une quelconque des revendications 1 et 2, caractérisé en ce que pour le décalage d'au moins un instant d'allumage, un signal additionnel d'angle de fermeture (U 21) est susceptible d'être engendré.

4. Procédé selon la revendication 3, caractérisé en ce que pour engendrer le signal additionnel d'angle de fermeture (U 21) se déroule un processus de comptage numérique, le début du comptage étant déterminé par la fin d'un signal régulier d'angle de fermeture (U 12) tandis que la fin du comptage est déterminée par la fin du processus de comptage d'une valeur de comptage prédéterminée, le signal additionnel d'angle de fermeture (U 21) étant susceptible d'être engendré par un processus de décodage pendant le processus de comptage.

5. Procédé selon la revendication 4, caractérisé en ce que la fréquence de comptage est augmentée lors de chaque processus de comptage.

6. Procédé selon l'une quelconque des revendications 4 et 5, caractérisé en ce que la valeur de comptage prédéterminée est réduite lors de chaque processus de comptage.

7. Procédé selon l'une quelconque des revendications 5 et 6, caractérisé en ce que pour augmenter la fréquence de comptage et/ou pour réduire la valeuer de comptage prédéterminée lors du rétablissement de l'alimentation en carburant, un processus de commutation commandé par les signaux additionnels d'angle de fermeture (U 21) est déclenché, grâce à quoi des fréquences de comptage et/ou des valeurs de comptage différentes déterminent successivement le processus de comptage.

8. Procédé selon la revendication 7, caractérisé en ce que le dispositif de commutation revêt la forme d'un compteur annulaire (23) par l'intermédiaire duquel un multiplex (25) est susceptible d'être commandé.

9. Procédé selon l'une quelconque des revendications 1 à 8, caractérisé en ce que, au rythme des signaux réguliers d'angle de fermeture (U 12) d'autres processus de comptage périodiques sont effectués, la valeur de comptage respectivement atteinte donnant la valeur de comptage prédéterminée pour le comptage du signal additionnel d'angle de fermeture.

10. Dispositif pour la mise en oeuvre du procédé selon l'une quelconque des revendications 1 à 9, avec un commutateur réagissant en fonctionnement frein-moteur et avec un dispositif d'étranglement susceptible d'être commandé par ce commutateur pour une alimentation en carburant, avec un étage de détection de la vitesse de rotation, grâce auquel audessous d'une vitesse de rotation susceptible d'être fixée, un actionnement du dispositif d'étranglement est empêché, dispositif caractérisé en ce que dans le cas de moteur à combustion interne avec une installation d'allumage numérique et un dispositif pour la coupure du courant de repos de la bobine d'allumage, à côté d'un dispositif de décodage (18, 19) pour la coupure du courant de la bobine d'allumage, un autre dispositif de décodage (18, 26) est associé à un compteur numérique (17) utilisé pour la coupure du courant de repos, qui au rythme des signaux d'angle de fermeture (U 12) accomplit des processus périodiques de comptage, ce compteur numérique (17) ainsi que l'autre dispositif de décodage (18, 26) constituant l'étage de détection de la vitesse de rotation.

11. Dispositif selon la revendication 10, caractérisé en ce que, au dispositif de comptage (17) assurant au rythme des signaux réguliers d'angle de fermeture (U 12) les processus de comptage périodiques, est associé un autre dispositif de comptage (18, 27) qui, pour une valeur de comptage associée à la vitesse de rotation maximale, interrompt l'alimentation en carburant.

12. Dispositif selon l'une quelconque des revendications 10 et 11, caractérisé en ce que pour obtenir une hystérésis de commutation pour une autre valeur de comptage associée à une vitesse de rotation déterminée, une commutation du dispositif d'étranglement (36 à 38) dans le second état de commutation respectif est effectuée.

13. Dispositif selon la revendication 12, caractérisé en ce qu'un étage de commutation bistable (28 ou bien 29) est branché à la suite du dispositif de décodage (18, 26 ou bien 18, 27), les points de commutation de cet étage de commutation étant susceptibles d'être prédéterminés par l'intermédiaire de deux valeurs décodées.

# FIG.1

# FIG.2

# FIG.3